# DEMANDE DE BREVET EUROPEEN

(11) **EP 0 984 309 A1**
(43) Date de publication de la demande: **08.03.2000**
(21) Numéro de dépôt: 99402057.6
(22) Date de dépôt: 13.08.1999
(51) Int. Cl.: G02B 6/16

(54) **Fibre optique monomode à dispersion décalée avec anneau exterieur d'indice de réfraction**

(30) Priorité: 13.08.1998 FR 9810382
(71) Demandeur: ALCATEL, 75008 Paris (FR)
(72) Inventeur: Paillot, Marianne, 95350 Saint Brice sous Foret (FR); Rousseau, Jean-Claude, 78400 Chatou (FR)
(74) Mandataire: Doressamy, Clarisse

(57) **Abrégé**

L'invention concerne une fibre optique monomode à dispersion décalée, présentant une gaine avec un indice (nₛ) donné, et un coeur présentant un profil d'indice en trapèze, triangle ou rectangle avec un anneau, le profil d'indice du coeur de fibre présentant un deuxième anneau externe d'indice (n₃) supérieur à celui de la gaine (nₛ), caractérisée en ce que l'indice (n₃) dudit deuxième anneau est supérieur ou égal à l'indice (n₂) dudit anneau.

L'invention permet de mieux contrôler la valeur de la longueur d'onde pour laquelle la dispersion chromatique est nulle, en conservant les autres caractéristiques de transmission des fibres connues, comme le diamètre de mode (surface effective importante) et l'atténuation.

## Description

La présente invention a pour objet une fibre optique monomode à dispersion décalée.

Les fibres optiques monomodes dites à dispersion décalée (DSF ou "dispersion shifted fibers") sont telles qu'à la longueur d'onde de transmission à laquelle elles sont utilisées, qui est en général différente de la longueur d'onde de 1.3 µm pour laquelle la dispersion de la silice est sensiblement nulle, la dispersion chromatique de l'onde transmise est sensiblement nulle; c'est à dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la fibre, lors de la fabrication de celle-ci, par exemple par un processus de MCVD connu en soi, et qui n'est pas décrit plus en détail ici. Une valeur typique pour la différence d'indice entre la gaine et le coeur de la fibre est 24.10⁻³; l'augmentation de l'indice dans la silice peut être obtenu en utilisant comme dopant du germanium. Les termes de gaine et de coeur sont connus de l'homme du métier; classiquement on appelle gaine la partie qui s'étend jusqu'à un diamètre de 125 µm. Le coeur correspond à la partie où environ 70% de l'énergie lumineuse se propage.

Ces fibres monomodes doivent en outre présenter de préférence des caractéristiques qui correspondent aux exigences des câbliers et des systémiers: d'une part des diamètres de mode faibles, et une bonne "câblabilité", se traduisant par une capacité de courbure de la fibre, et une faible atténuation; d'autre part, un diamètre de mode aussi grand que possible, une aire effective importante, une valeur appropriée de la longueur d'onde λ₀ de dispersion nulle. L'utilisation de ces fibres pour des systèmes de transmission à multiplexage de longueurs d'onde rend les contraintes encore plus sévères.

Il serait préférable d'utiliser de la fibre ayant une valeur de λ₀ supérieure ou égale à 1565 nm et avantageusement supérieure ou égale à 1585 nm; pour éviter l'emploi de fibre à compensation de dispersion (DCF ou "dispersion compensating fiber"), laquelle présente l'inconvénient de favoriser les effets non linéaires, d'être fortement atténuante et difficilement câblable. Toutefois, les fibres existantes présentant de telles valeurs de λ₀ ont une surface effective faible, ou encore une atténuation forte autour de 1550 nm.

De nombreux profils d'indice ont été proposés pour de telles fibres optiques monomodes à dispersion décalée. Le profil d'indice est généralement qualifié en fonction de l'allure de la courbe représentative de l'indice en fonction du rayon de la fibre. On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Les premières fibres optiques à dispersion décalée étaient du type à saut d'indice. triangle, gaussienne ou puissance α. Les caractéristiques de ces fibres ne sont plus considérées comme suffisantes, notamment du fait d'un faible diamètre de mode et de leur sensibilité aux courbures, et ceci bien que ces fibres présentent des valeurs d'atténuation inférieures à 0,20 dB/km à 1550 nm. Une nouvelle famille de fibres a donc été développée : des fibres à profil d'indice en trapèze et anneau.

Ainsi, la demande de brevet français FR-A-2 724 234 décrit une fibre optique monomode à dispersion décalée, présentant un profil d'indice en trapèze, ou dans les cas limites en triangle ou en rectangle, avec un anneau entourant le trapèze. La figure 1 montre l'allure du profil de consigne proposé dans ce document. Suivant l'habitude, les abscisses sur la figure 1 donnent la distance r au centre de la fibre, et les ordonnées l'indice, défini par sa différence en pour cent par rapport à l'indice de la gaine de la fibre.

Cette fibre présente une surface effective supérieure à 70 µm², et une atténuation de l'ordre de 0,20 dB/km à 1558 nm, une dispersion chromatique de l'ordre de 0,7 ps/nm.km, et une longueur d'onde λ₀ de l'ordre de 1550 nm.

Les demandes de brevet européen EP-A-0 131 634 et EP-A-0 368 014 décrivent une fibre du même type, avec un coeur en rectangle entouré d'un anneau.

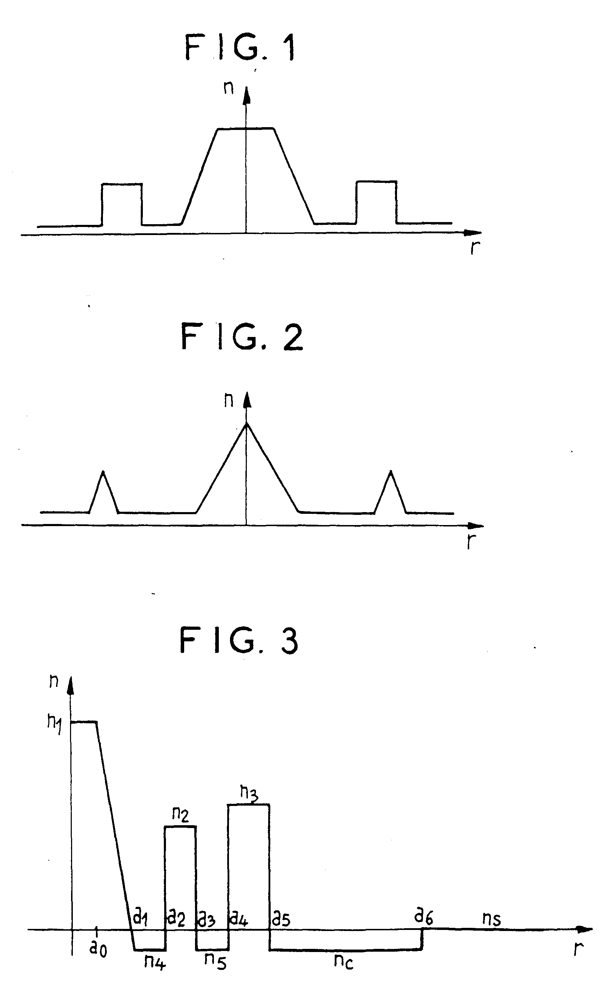

La demande de brevet européen EP-A-0 724 171 décrit une fibre ayant un profil d'indice avec un profil α, entouré par un anneau triangulaire, représenté à la figure 2. Cette fibre présente une surface effective de 72 µm².

D'autre part, la demande de brevet européen EP-A-0 127 408 décrit une fibre ayant un profil d'indice avec un coeur en rectangle entouré de deux anneaux, l'indice du rectangle et l'indice de chacun des anneaux étant le même, ou lesdits indices étants différents. De telles fibres ayant un indice de coeur inférieur ou égal aux indices de chacun des anneaux, il n'apparaît pas qu'elles permettent de réaliser des fibres à dispersion décalées telles ques recherchées. De plus, l'article de Safaai-Jazi A. et al.. " New designs for dispersion-shifted and dispersion flattened fibers", Proceedings of the SPIE, Vol. 1176, 5 septembre 1989, pages 196-201, présente une fibre ayant un profil d'indice avec un coeur en rectangle avec deux anneaux, les deux anneaux ayant même indice, l'indice du coeur étant supérieur à l'indice des anneaux. Une telle fibre présente les caractéristiques d'une fibre à dispersion plate. Il n'apparaît pas qu'elle permette de réaliser des fibres à dispersion décalée telles que recherchées.

Ces différentes solutions connues ne permettent pas, tout en conservant les caractéristiques adaptées à une bonne câblabilité, d'obtenir une valeur de longueur d'onde λ₀ élevée, ou qui puisse être choisie librement.

L'invention propose une solution qui permet de maintenir une surface effective A_{ef} importante, typiquement au delà de 70 µm²; ce qui limite les effets non-linéaires. La fibre selon l'invention permet aussi d'obtenir une atténuation faible, de préférence inférieure ou égale à 0,2dB/km, et une dispersion chromatique généralement supérieure ou égale en valeur absolue à 1,5 ps/nm.km, par exemple de l'ordre de 2 ps/nm.km en valeur absolue, pour des longueurs d'onde entre 1530 et 1585 nm. Elle permet en outre d'obtenir, pour tous ces paramètres, une longueur d'onde λ₀ de dispersion chromatique nulle avantageusement supérieure ou égale à 1585 nm; ce qui permet d'éviter ou de limiter, si la fibre est utilisée pour des transmissions en multiplexage de longueurs d'onde, le mélange quatre ondes et l'emploi de fibres à compensation de dispersion.

En d'autres termes, l'invention propose un procédé pour augmenter la valeur λ₀ de la longueur d'onde pour laquelle la dispersion chromatique s'annule dans une fibre optique monomode à dispersion décalée, présentant une gaine avec un indice (nₛ) donné, un coeur de fibre avec un profil d'indice en trapèze, ou dans les cas limites en triangle ou en rectangle, avec un anneau, et un diamètre de mode avantageusement supérieur ou égal à 8 µm, comprenant l'ajout dans le profil d'indice du coeur de fibre d'une partie annulaire externe d'indice supérieur à celui de la gaine et supérieur ou égal, de préférence supérieur, à l'indice de l'anneau du coeur.

L'invention concerne ainsi une fibre optique monomode à dispersion décalée, présentant
- une gaine avec un indice donné,
- un coeur de fibre présentant un profil d'indice en trapèze, triangle ou rectangle avec un anneau, le profil d'indice du coeur de fibre présentant un deuxième anneau externe d'indice supérieur à celui de la gaine,
caractérisée en ce que l'indice dudit deuxième anneau est supérieur ou égal à l'indice dudit anneau.

De préférence, l'indice dudit deuxième anneau est généralement compris entre 1 et 6.10⁻³.

De préférence, l'indice dudit deuxième anneau est supérieur (strictement) à l'indice dudit anneau.

De préférence, le deuxième anneau présente une épaisseur comprise entre 0,3 et 0,8 fois le rayon de la partie du coeur en trapèze, triangle ou rectangle.

On peut encore prévoir que l'indice dudit anneau est supérieur à celui de la gaine.

Dans un mode de réalisation, l'indice le plus élevé dudit trapèze, triangle ou rectangle est généralement supérieur ou égal à 9. 10⁻³.

De préférence, l'indice le plus élevé dudit trapèze, triangle ou rectangle présente une valeur supérieure d'au moins 50% de la valeur de l'indice dudit l'anneau.

Dans un mode de réalisation, l'indice dudit anneau est généralement compris entre 1 et 3. 10⁻³.

Dans un mode de réalisation, l'indice de la fibre entre ledit trapèze, triangle ou rectangle et ledit anneau est inférieur ou égal à celui de la gaine. Un tel indice est généralement compris entre -0,1 et -0,5. 10⁻³.

Dans un autre mode de réalisation, l'indice entre ledit anneau et ledit deuxième anneau externe est inférieur ou égal à celui de la gaine. Un tel indice est généralement compris entre -0,1 et -0,5. 10⁻³.

De préférence, la partie de la fibre comprise entre ledit anneau et ledit deuxième anneau externe présente une épaisseur comprise entre 0,3 et 0,8 fois le rayon de la partie du coeur en trapèze, triangle ou rectangle.

Avantageusement, l'indice entre ledit anneau et ledit deuxième anneau externe est inférieur ou égal à l'indice entre ledit trapèze, triangle ou rectangle et ledit anneau.

On peut encore prévoir entre ledit deuxième anneau externe et la gaine une partie annulaire d'indice inférieur à l'indice dudit deuxième anneau et à l'indice de la gaine. Un tel indice est généralement compris entre -0,1 et -0,5. 10⁻³.

La fibre selon l'invention est telle que la valeur de la longueur d'onde pour laquelle la dispersion chromatique s'annule est avantageusement supérieure ou égale à 1565 nm, de préférence supérieure ou égale à 1585 nm.

Avantageusement, ladite fibre présente une surface effective supérieure ou égale à 70 µm².

De préférence. elle présente une atténuation inférieure ou égale à 0,2 dB/km pour une valeur de longueur d'onde de 1550 nm.

Dans un mode de réalisation, la fibre présente une longueur d'onde de coupure inférieure ou égale à 1530 nm. Elle peut aussi présenter une dispersion chromatique de l'ordre de - 2 ps/nm.km entre 1530 et 1580 nm.

D'autres caractéristiques et avantages de l'invention apparaîtront à la lecture de la description qui suit de divers modes de réalisation de l'invention, donnée à titre d'exemple et en référence aux dessins annexés qui montrent:
- figures 1 et 2 une représentation schématique du profil d'indice de consigne de fibres monomodes à dispersion décalée connues;
- figure 3 une représentation schématique du profil d'indice d'une fibre selon l'invention.

Les figures 1 et 2 ont déjà été commentées.

L'invention propose d'ajouter un deuxième anneau d'indice supérieur ou égal, de préférence supérieur, à l'indice d'un premier anneau sur les profils de fibre monomode à dispersion décalée existant du type trapèze avec anneau. Elle permet de conserver une faible atténuation, une surface effective importante, tout en obtenant des valeurs de λ₀ élevées, typiquement supérieures ou égales à 1565 nm. et avantageusement supérieures ou égales à 1585 nm.

L'invention permet généralement d'obtenir pour la fibre une longueur d'onde λ₀ d'au moins 1565 nm, de préférence d'au moins 1585 nm, et les caractéristiques suivantes:
- une surface efficace supérieure ou égale à 70 µm²;
- une atténuation inférieure ou égale à 0,2 dB/km pour une valeur de longueur d'onde de 1550 nm;
- une longueur d'onde de coupure inférieure ou égale à 1530 nm; et
- une dispersion chromatique de l'ordre de -2 ps/nm.km entre 1530 et 1580 nm.

On peut encore prévoir autour de l'anneau une partie annulaire d'indice inférieur à celui de la gaine, notamment si ceci facilite la fabrication de la fibre.

### Exemple 1 (comparatif)

A titre de comparaison, on considère dans la suite une fibre présentant un profil du type de celui de la figure 1, avec une partie centrale en trapèze et un anneau: cette fibre présente une partie centrale d'indice n₁ = + 10,5.10⁻³, pour des rayons inférieurs à a₀, une partie d'indice
n₄ = - 0,3.10⁻³ pour des rayons entre a₁ et a₂, l'indice décroissant sensiblement linéairement entre a₀ et a₁, une partie d'indice n2 = + 2.10⁻³ pour des rayons entre a₂ et a₃, et une gaine.

Les rayons satisfont les relations suivantes:
a₀/a₁ ≤ 0,4;
a₂/a₁ ≥ 1,4; et
0,3 ≤ (a₃ - a₂)/a₁ ≤ 0,8.

Une telle fibre présente une longueur d'onde λ₀ pour laquelle la dispersion chromatique est nulle de 1565 nm. une aire efficace de 50 µm², une atténuation théorique R = 0,175 dB/km à 1550 nm, et une longueur d'onde de coupure de 1300 nm environ.

### Exemple 2 (selon l'invention).

La figure 3 est une représentation schématique du profil d'indice d'une fibre selon un premier mode de réalisation de l'invention. La fibre de la figure 3 est une fibre du type à triangle ou trapèze avec anneau, sur laquelle est ajouté un deuxième anneau ou anneau externe d'indice supérieur ou égal à l'indice du premier anneau. Cette fibre présente en conséquence une partie centrale en trapèze et deux anneaux, soit plus précisément:
- une partie centrale d'indice n₁ = + 10,5.10⁻³, pour des rayons inférieurs à a₀;
- une partie d'indice n₄ = - 0,3.10⁻³ pour des rayons entre a₁ et a₂, l'indice décroissant sensiblement linéairement entre a₀ et a₁;
- une partie d'indice n₂ = + 2.10⁻³ pour des rayons entre a₂ et a₃;
- une partie d'indice n₅ = - 0,3.10⁻³, pour des rayons entre a₃ et a₄;
- une partie d'indice n₃, égal à l'indice n₂, pour des rayons entre a₄ et a₅;
- une partie d'indice n_{c} = - 0,3.10⁻³ pour des rayons entre a₅ et a₆; et
- une gaine d'indice nₛ.

Les rayons satisfont généralement avantageusement les relations suivantes :
2,5 µm ≤ a₀ ≤ 4 µm
a₀/a₁ ≤ 0,4;
a₂/a₁ ≥ 1,4;
0,3 ≤ (a₃ - a₂)/a₁ ≤ 0,8;
0,3 ≤ (a₄ - a₃)/a₁ ≤ 0,8;
0,3 ≤ (a₅ - a₄)/a₁ ≤ 0,8;
a₆ ≤10.a₁.

Cette configuration de l'invention permet d'atteindre une longueur d'onde λ₀ de 1585 nm, tout en conservant les autres paramètres déjà obtenus dans la fibre de l'exemple 1. Comme expliqué plus haut, cette valeur de la longueur d'onde λ₀ permet d'éviter d'utiliser de la fibre à compensation de dispersion dans les applications en multiplexage de longueur d'onde. On augmente ainsi, par rapport à l'exemple de l'art antérieur, la valeur λ₀ de la longueur d'onde pour laquelle la dispersion chromatique s'annule.

La présence de la partie d'indice n_{c} dépend du procédé de fabrication de la fibre, et cette partie peut ne pas être présente dans certaains modes de réalisation de l'invention.

### Exemple 3 (selon l'invention).

Dans un autre mode de réalisation, l'invention propose une fibre présentant un profil d'indice analogue à celui de l'exemple 2, cf. figure 3, mais avec un indice n₃ = +4. 10⁻³, c'est-à-dire supérieur à l'indice n₂. Dans cet exemple, la fibre présente une valeur de 1620 nm pour la longueur d'onde λ₀. La longueur d'onde de coupure est de 1530 nm, et les autres paramètres sont identiques à ceux de l'exemple 2.

Ainsi par rapport à l'exemple 2, on a montré que les caractéristiques de transmission que sont la surface effective et l'atténuation gardent des valeurs intéressantes alors que la présence d'un deuxième anneau d'indice supérieur à celui du premier anneau permet avantageusement d'obtenir une valeur de la longueur d'onde λ₀ plus élevée.

### Exemple 4 (selon l'invention).

Le profil de l'exemple 4 est identique à celui de l'exemple 2, à cela près que l'indice n₁ vaut 9.10⁻³. On obtient alors une longueur d'onde λ₀ de 1565 nm. une surface effective de 70 µm², et une atténuation R = 0,161 dB/km à 1550 nm.

En baissant la valeur de l'indice n₁, on a donc augmenté la surface effective et diminué l'atténuation; la longueur d'onde λ₀ est de 1565 nm. A titre de comparaison. une fibre analogue sans le deuxième anneau présenterait une longueur d'onde λ₀ de l'ordre de 1530 nm.

### Exemple 5 (selon l'invention).

Le profil de l'exemple 5 est identique à celui de l'exemple 3, à la seule différence que l'indice n₁ vaut 9.10⁻³. Dans ce cas, on obtient une longueur d'onde λ₀ de 1585 nm, une surface effective de 80 µm², et une atténuation R = 0,160 dB/km à 1550 nm.

Ainsi par rapport à l'exemple 4, on a montré que les caractéristiques de transmission de la fibre que sont la surface effective et l'atténuation, gardent des valeurs intéressantes alors que la présence d'un deuxième anneau d'indice supérieur à celui du premier anneau permet avantageusement d'obtenir une valeur de la longueur d'onde λ₀ plus élevée.

Dans tous ces exemples, on obtient des résultats similaires en modifiant les valeurs des indices n₄, n₅ et n_{c}, qui peuvent être distincts ou non. Ces valeurs peuvent être supérieures, inférieures ou égales à la valeur de l'indice nₛ de la gaine.

L'invention permet ainsi d'augmenter la valeur de la longueur d'onde pour laquelle la dispersion s'annule, par rapport à un profil de fibre connu.

Bien entendu, la présente invention n'est pas limitée aux exemples et mqdes de réalisation décrits et représentés, mais elle est susceptible de nombreuses variantes accessibles à l'homme de l'art. On pourrait ainsi utiliser un deuxième anneau présentant non pas un profil rectangulaire, comme dans les modes de réalisation préférés décrits plus haut, mais un deuxième anneau présentant un profil triangulaire ou trapézoïdal. Un tel profil permet encore d'augmenter la valeur de la longueur d'onde pour laquelle la dispersion chromatique s'annule.

## Revendications

1. Fibre optique monomode à dispersion décalée, présentant
- une gaine avec un indice (nₛ) donné,
- un coeur de fibre présentant un profil d'indice en trapèze, triangle ou rectangle avec un anneau, le profil d'indice du coeur de fibre présentant un deuxième anneau externe d'indice (n₃) supérieur à celui de la gaine (nₛ),
caractérisée en ce que l'indice (n₃) dudit deuxième anneau est supérieur ou égal à l'indice (n₂) dudit anneau.

2. Fibre selon la revendication 1 telle que l'indice (n₃) dudit deuxième anneau est supérieur à l'indice (n₂) dudit anneau.

3. Fibre selon l'une des revendications 1 ou 2 telle que l'indice (n₃) dudit deuxième anneau est compris entre 1 et 6. 10⁻³.

4. Fibre selon l'une des revendications 1 à 3 telle que ledit deuxième anneau présente une épaisseur (a₅ - a₄) comprise entre 0,3 et 0,8 fois le rayon de la partie (a₁) du coeur en trapèze, triangle ou rectangle.

5. Fibre selon l'une des revendications 1 à 4 telle que l'indice (n₂) dudit anneau est supérieur à celui (nₛ) de la gaine.

6. Fibre selon l'une des revendications 1 à 5 telle que l'indice (n₁) le plus élevé dudit trapèze, triangle ou rectangle est supérieur ou égal à 9. 10⁻³.

7. Fibre selon l'une des revendications 1 à 6 telle que l'indice (n₁) le plus élevé dudit trapèze, triangle ou rectangle présente une valeur supérieure ou égale à 50% de la valeur de l'indice dudit anneau (n₂).

8. Fibre selon l'une des revendications 1 à 7 telle que l'indice (n₂) dudit anneau est compris entre 1 et 3. 10⁻³.

9. Fibre selon l'une des revendications 1 à 8 telle que l'indice (n₄) entre ledit trapèze, triangle ou rectangle et ledit anneau est inférieur ou égal à celui (nₛ) de la gaine.

10. Fibre selon l'une des revendications 1 à 9 telle que l'indice (n₄) entre ledit trapèze, triangle ou rectangle et ledit anneau est compris entre -0,1 et -0,5. 10⁻³.

11. Fibre selon l'une des revendications 1 à 10 telle que l'indice (n₅) entre ledit anneau et ledit deuxième anneau externe est inférieur ou égal à celui (nₛ) de la gaine.

12. Fibre selon l'une des revendications 1 à 10 telle que l'indice (n₅) entre ledit anneau et ledit deuxième anneau externe est compris entre -0,1 et -0,5. 10⁻³.

13. Fibre selon l'une des revendications 1 à 11 telle que la partie de la fibre entre ledit anneau et ledit deuxième anneau externe présente une épaisseur (a₄ - a₃) comprise entre 0,3 et 0,8 fois le rayon (a₁) de la partie du coeur en trapèze, triangle ou rectangle.

14. Fibre selon l'une des revendications 1 à 13 telle que l'indice (n₅) entre ledit anneau et ledit deuxième anneau externe est inférieur ou égal à l'indice (n₄) entre ledit trapèze, triangle ou rectangle et ledit anneau.

15. Fibre selon l'une des revendications 1 à 14 telle que qu'elle présente entre ledit deuxième anneau externe et la gaine une partie annulaire d'indice (n_{c}) inférieur à l'indice (n₃) dudit deuxième anneau et à l'indice (nₛ) de la gaine.

16. Fibre selon la revendication 15 telle que ledit indice (n_{c}) est compris entre -0,1 et -0,5. 10⁻³.

17. Fibre selon l'une des revendications 1 à 16 telle que la valeur de la longueur d'onde pour laquelle la dispersion chromatique s'annule est supérieure ou égale à 1565 nm.

18. Fibre selon la revendication 17 telle que la valeur de la longueur d'onde pour laquelle la dispersion chromatique s'annule est supérieure ou égale à 1585 nm.

19. Fibre selon l'une des revendications 1 à 18 présentant une surface effective supérieure ou égale à 70 µm².

20. Fibre selon l'une des revendications 1 à 19 présentant une atténuation inférieure à 0,2 dB/km pour une valeur de longueur d'onde de 1550 nm.

21. Fibre selon l'une des revendications 1 à 20 présentant une longueur d'onde de coupure inférieure à 1530 nm.

22. Fibre selon l'une des revendications 1 à 21 présentant une dispersion chromatique de l'ordre de - ps/nm.km entre 1530 et 1580 nm.
